# FASCICULE DE BREVET EUROPEEN

(11) **EP 0 552 997 B1**
(45) Date de publication et mention de la délivrance du brevet: **21.02.1996**
(21) Numéro de dépôt: 93400031.6
(22) Date de dépôt: 08.01.1993
(51) Int. Cl.: H01B 7/36

(54) **Dispositif d'identification pour conducteur**
Leiterkennzeichnungsvorrichtung
Conductor marking device

(30) Priorité: 22.01.1992 FR 9200684
(43) Date de publication de la demande: 28.07.1993
(73) Titulaire: SCHNEIDER ELECTRIC SA, F-92100 Boulogne-Billancourt (FR)
(72) Inventeur: Millet, Jean-Marie, F-21490 Ruffey Les Echirey (FR); Makuc, Daniel, F-21000 Dijon (FR)
(74) Mandataire: Carias, Alain

(56) Documents cités:
- DE-C- 633 468
- FR-E- 51 808

## Description

La présente invention concerne un dispositif d'identification pour conducteur, câble ou conduit, par exemple électrique, optique ou pneumatique, comprenant un support en forme de manchon qui présente un passage axial de forme adaptée à celle de la gaine du câble à repérer et qui porte au moins un élément de repérage. Pour simplifier, le seul terme "câble" sera utilisé par la suite.

De tels dispositifs sont bien connus et facilitent la câblage en permettant d'identifier visuellement chaque câble d'une installation. Lorsque le passage axial du manchon a un diamètre légèrement supérieur à celui de la gaine du câble, pour pouvoir coulisser sur celui-ci librement ou à glissement doux, il est important de maintenir le manchon porte-repère à la place qui lui est assignée.

L'invention a ainsi pour but de freiner efficacement et simplement le manchon d'un dispositif du type décrit sur le conducteur, conduit ou câble à repérer, tout en conservant une grande simplicité du repérage.

On connaît de FR-E-51808 un porte-repères muni d'un embout cylindrique où se loge l'extrêmité dénudée du câble et, à l'opposé de l'embout, des pattes de clipsage. Il est donc clairement destiné à coiffer l'extrémité dénudée du câble et ne peut donc pas être déplacé sur celui-ci contrairement au dispositif d'identification selon la présente invention.

L'invention est indiquée dans la revendication 1. Selon l'invention, le dispositif du type décrit comprend un élément de freinage du manchon, solidarisé avec celui-ci et comportant un crochet de forme adaptée à celle du câble pour envelopper une partie du pourtour de la gaine en un endroit de celle-ci laissé libre par le manchon. Le crochet est de préférence relié de manière pivotante et/ou élastique au reste du manchon et il peut avantageusement être rattaché à une plaquette portant ou protégeant l'élément de repérage.

Le freinage ainsi obtenu est particulièrement simple et efficace. Il est avantageux que l'élément de freinage soit solidarisé avec le manchon par l'intermédiaire d'au moins un picot pénétrant à force dans un évidement du manchon et prenant éventuellement appui directement sur la gaine du câble. La plaquette peut d'autre part être moulée à plat avec le crochet de freinage.

Un exemple de réalisation non limitatif de l'invention va être décrit maintenant en regard des dessins annexés :
- la figure 1 montre en coupe axiale un porte-repère selon l'invention ;
- la figure 2 est la coupe II-II du porte-repère de la figure 1 ;
- la figure 3 est une coupe axiale d'un mode de réalisation préféré du porte-repère ;
- la figure 4 représente à plus grande échelle le détail A de la figure 3 dans une variante de réalisation ;
- les figures 5 et 6 montrent en vue de dessus deux formes d'exécution de plaquette-crochet ;
- les figures 7 et 8 sont les élévations correspondantes ;
- la figure 9 est une vue partielle d'une bande de plaquette-crochet.
- la figure 10 représente schématiquement une variante de réalisation de l'invention.

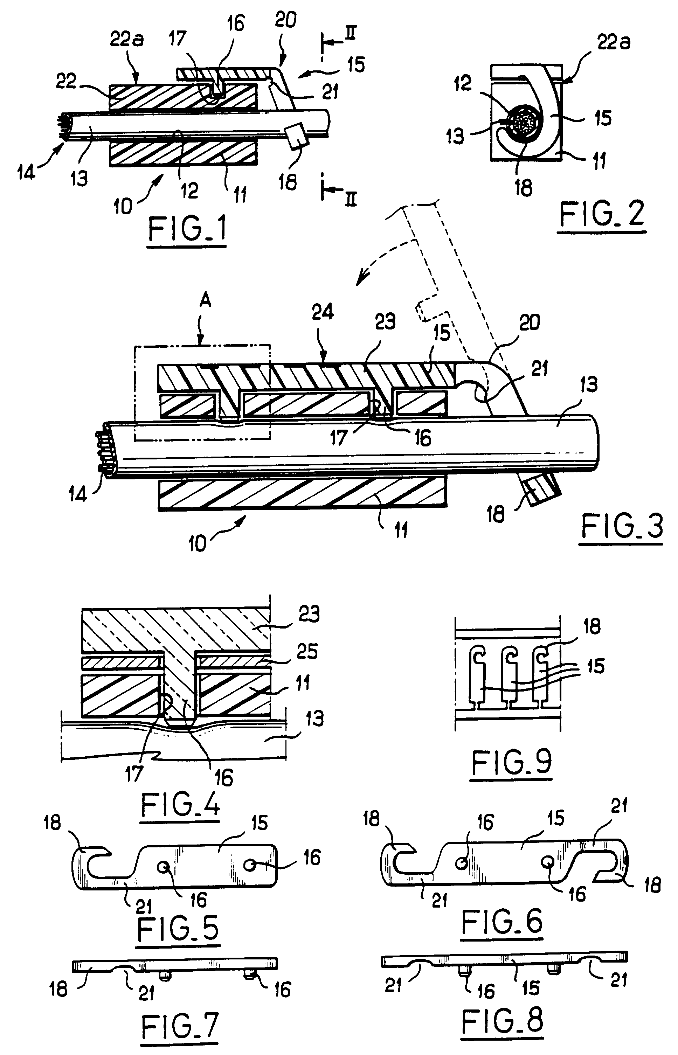

Le dispositif d'identification, ou porte-repère 10, illustré par la figure 1 comprend un support 11 en forme de manchon cylindrique ou parallélépipédique muni d'un passage axial 12 cylindrique ou d'une autre forme adaptée à la gaine 13 d'un câble ou conducteur 14 à repérer. Le diamètre du passage 12 est légèrement supérieur à celui de la gaine 13 pour permettre au support 11 de coulisser librement ou à frottement doux le long du câble.

Le porte-repère 10 comprend un élément de freinage amovible 15 qui est solidarisé avec le manchon par l'intermédiaire d'au moins un picot 16 pénétrant à force dans un évidement 17 du manchon. La solidarisation peut aussi s'effectuer par encliquetage. L'élément de freinage 15 comporte un crochet 18 de forme adaptée à celle de la gaine 13 du câble. Le crochet enveloppe sur une partie de son pourtour, de préférence sur au moins un demi-tour et par exemple sur environ trois quarts de tour, la gaine en un endroit de celle-ci qui est laissé libre par le manchon, de préférence à une extrémité de l'élément de freinage. L'effet d'accrochage est amélioré par la position de travail du crochet, oblique par rapport à un plan transversal à l'axe du câble. L'obliquité de la position de travail du crochet dépend du diamètre du câble sur lequel est disposé le manchon. Le crochet est lisse mais pourrait bien entendu être strié ou cranté.

Le crochet 18 est relié élastiquement à l'élément de freinage 15. Cette liaison élastique peut être constituée par une charnière adéquate 20 et/ou par un affaiblissement 21 de la section de l'élément 15.

Dans la forme d'éxécution de la figure 1, le repère 22 est porté par la surface 22a du support laissée libre par l'élément de freinage. Dans les formes d'exécution préférentielles des figures 3 et 4, l'élément de freinage 15 fait partie intégrante d'une plaquette 23 porte-repères (figure 4) ; dans le cas de la figure 3, la plaquette 23 est opaque et porte l'identification 24 de repérage ; dans le cas de la figure 4, la plaquette 23 est transparente et recouvre une étiquette de repérage 25. Dans l'un et l'autre cas, la plaquette présente des picots 16 de positionnement sur le manchon qui s'appliquent de plus directement sur le câble pour contribuer au freinage du manchon. Les évidements 17 sont alors prévus traversants jusqu'au passage 12.

Il est intéressant que le crochet 18 vienne de moulage à plat avec la plaquette 23 (figures 5 à 8) et puisse être fabriqué simplement en bande (figure 9). La plaquette 23 comprend un seul crochet (figures 5 et 7) ou deux crochets (figures 6 et 8). Comme indiqué sur la figure 3 en tirets dans le cas d'une plaquette à un seul crochet, le crochet est d'abord passé autour d'un câble puis la plaquette est inclinée vers le manchon pour être positionnée et encliquetée grâce à la pénétration et au maintien des picots 16 dans les évidements 17. Un même type de plaquette peut coopérer avec des manchons de différents types, congrus pour des câbles de diamètres différents.

Le manchon 11 du porte-repère décrit peut faire partie d'un embout conducteur à jupe isolante dans lequel on serre l'extrémité du câble et dont le manchon 11 constitue une partie sécable.

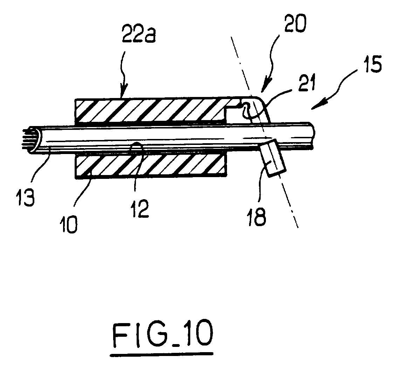

Dans une variante de réalisation représentée figure 10 de l'invention, le crochet est rattaché directement au corps du manchon par la charnière 20 et/ou l'affaiblissement 21. En l'absence d'élément de freinage amovible ou de plaquette 23, les repères sont alors directement portés par la surface extérieure 22a du manchon. Le crochet est dans ce cas par exemple moulé à plat avec le manchon et plié lors de son montage sur le câble

L'invention, décrite à propos du repérage d'un câble électrique, est applicable au repérage de conducteurs optiques ou conduits pneumatiques.

## Revendications

1. Dispositif d'identification sur conducteur, conduit ou câble, comprenant un support (11) en forme de manchon présentant un passage axial (12) de forme adaptée à celle de la gaine (13) du câble à repérer, et portant au moins un élément de repérage (22, 24, 25), caractérisé par le fait que le diamètre du passage (12) est légèrement supérieur à celui de la gaine (13) pour permettre le coulissement du support (11) et par le fait que le manchon (11) présente un élément de freinage (15), lequel élément est solidarisé avec le manchon et comporte un crochet (18) de forme adaptée à celle de la gaine (13) du câble pour envelopper une partie du pourtour de la gaine en un endroit de celle-ci laissé libre par le manchon.

2. Dispositif selon la revendication 1, caractérisé par le fait que l'élément de freinage (15) fait partie d'une plaquette (23) portant ou protégeant l'élément de repérage.

3. Dispositif selon la revendication 1 ou 2, caractérisé par le fait que l'élément de freinage (15) est solidarisé de manière amovible avec le manchon (11) par l'intermédiaire d'au moins un picot (16) pénétrant à force dans un évidement (17) du manchon.

4. Dispositif selon la revendication 3, caractérisé par le fait que le picot (16) prend appui sur la gaine (13) du câble.

5. Dispositif selon l'une des revendications 1 à 4, caractérisé par le fait que le crochet (18) est situé à une extrémité de l'élément de freinage et est lié de manière pivotante et/ou élastique à celui-ci pour prendre une position de travail oblique.

6. Dispositif selon l'une des revendications 1 à 4, caractérisé par le fait que le crochet (18) est directement lié de manière pivotante et/ou élastique au manchon (11).

7. Dispositif selon la revendication 5 ou 6, caractérisé par le fait que le crochet (18) est relié au reste de l'élément de freinage ou du manchon par une zone de section affaiblie (21).

8. Dispositif selon la revendication 5, caractérisé par le fait que le crochet (18) vient de moulage à plat avec la plaquette (23).

9. Dispositif selon la revendication 6, caractérisé par le fait que le crochet (18) vient de moulage à plat avec le manchon.

## Patentansprüche

1. Vorrichtung zur Kennzeichnung von Leitern, Röhren und Kabeln, bestehend aus einem muffenförmigen Träger (11) mit axialem Durchgang (12), dessen Form der Form des zu kennzeichnenden Kabelmantels (13) angepaßt ist und der mindestens mit einem Kennzeichnungselement (22, 24, 25) ausgerüstet ist, **dadurch gekennzeichnet, daß** der Durchmesser des Durchgangs (12) etwas größer als der Durchmesser des Kabelmantels (13) ist, damit der Träger (11) gleiten kann, und daß der muffenförmige Träger (11) ein mit ihm verbundenes Bremselement (15) sowie eine Klammer (18) aufweist, deren Form der des Kabelmantels (13) entspricht und die einen Teil des Mantelumfangs an einer Stelle, an der letzterer nicht von dem muffenförmigen Träger (11) umhüllt ist, umschließt.

2. Vorrichtung nach Patentanspruch 1, dadurch gekennzeichnet, daß das Bremselement (15) Bestandteil der Scheibe (23) ist, die das Kennzeichnungselement trägt bzw. schützt.

3. Vorrichtung nach Patentanspruch 1 oder 2, dadurch gekennzeichnet, daß das Bremselement (15) abnehmbar und durch mindestens eine Spitze (16) mit dem muffenförmigen Träger (11) verbunden ist, die in eine Aushöhlung (17) des muffenförmigen Trägers (11) eingedrückt wird.

4. Vorrichtung nach Patentanspruch 3, dadurch gekennzeichnet, daß die Spitze (16) auf dem muffenförmigen Träger (11) aufliegt.

5. Vorrichtung nach Patentanspruch 1 bis 4, dadurch gekennzeichnet, daß sich die Klammer (18) an einem Ende des Bremselementes befindet und schwenkbar bzw. elastisch direkt mit diesem verbunden ist, um eine schräge Arbeitsstellung einnehmen zu können.

6. Vorrichtung nach Patentanspruch 1 bis 4, dadurch gekennzeichnet, daß die Klammer (18) schwenkbar bzw. elastisch mit dem muffenförmigen Träger (11) verbunden ist.

7. Vorrichtung nach Patentanspruch 5 oder 6, dadurch gekennzeichnet, daß die Klammer (18) über eine Stelle mit geringerem Querschnitt (21) mit dem restlichen Teil des Bremselementes bzw. des muffenförmigen Trägers verbunden ist.

8. Vorrichtung nach Patentanspruch 5, dadurch gekennzeichnet, daß die Klammer (18) flach an die Scheibe (23) angeformt ist.

9. Vorrichtung nach Patentanspruch 5, dadurch gekennzeichnet, daß die Klammer (18) flach an den muffenförmigen Träger angeformt ist.

## Claims

1. Identification device for conductors, pipes and cables comprising a support sleeve (11) having an axial passage (12) the shape of which matches that of the sheath (13) of the cable to be marked and carrying at least one marker member (22, 24, 25), characterised in that the diameter of the passage (12) is slightly greater than that of the sheath (13) to enable the support (11) to slide and in that the sleeve (11) incorporates an immobilising member (15) fastened to the sleeve and including a hook (18) the shape of which matches that of the sheath (13) of the cable to surround part of the perimeter of the sheath at a location thereof that is not covered by the sleeve.

2. Device according to claim 1 characterised in that the immobilising member (15) is part of a plate (23) carrying or protecting the marker member.

3. Device according to claim 1 or claim 2 characterised in that the immobilising member (15) is removably fastened to the sleeve (11) by at least one peg (16) forcibly penetrating an opening (17) in the sleeve.

4. Device according to claim 3 characterised in that the peg (16) bears on the sheath (13) of the cable.

5. Device according to any one of claims 1 to 4 characterised in that the hook (18) is at one end of the immobilising member and is pivotally and/or elastically joined to the latter to assume an oblique operative position.

6. Device according to any one of claims 1 to 4 characterised in that the hook (18) is pivotally and/or elastically joined directly to the sleeve (11).

7. Device according to claim 5 or claim 6 characterised in that the hook (18) is joined to the remainder of the immobilising member or the sleeve by a thinner area (21).

8. Device according to claim 5 characterised in that the hook (18) is moulded flat with the plate (23).

9. Device according to claim 6 characterised in that the hook (18) is moulded flat with the sleeve.
